Europäisches Patentamt

European Patent Office

Office européen des brevets

(19)

(11) Publication number: **0 186 398**

**A2**

(12) # EUROPEAN PATENT APPLICATION

(21) Application number: **85309100.7**

(22) Date of filing: **13.12.85**

(51) Int. Cl.4: **B01J 29/34**

(30) Priority: **28.12.84 US 687330**

(43) Date of publication of application:
**02.07.86 Bulletin 86/27**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Chu, Pochen**
**1173 Ollerton Road**
**West Deptford New Jersey 08066(US)**
Inventor: **Huang, Yun-Yang**
**98 William Feather Drive**
**Voorhees New Jersey 08043(US)**

(74) Representative: **West, Alan Harry**
**Mobil Court 3 Clements Inn**
**London WC2A 2EB(GB)**

(54) A method of preparing a hydrothermally stable zeolite catalyst.

(57) In a method for preparing a hydrothermally stable zeolite catalyst, a zeolite having a Constraint Index of 1 to 12, a silica to alumina mole ratio of 12 to 100 and having incorporated therein $Cu^{++}$ cation is contacted with a reducing agent comprising a mixture of CO and $NH_3$ having a molar ratio of $CO:NH_3$ ranging from 50:1 to 1:1, at a temperature of 400 to 550°C (750 to 1022°F) and a pressure of $10^{-1}$ to $10^4$ kPa so as to reduce at least some of said $Cu^{++}$ cations to $Cu^+$ cations.

EP 0 186 398 A2

## A METHOD OF PREPARING A HYDROTHERMALLY STABLE ZEOLITE CATALYST

The present invention relates to a method of preparing a zeolite catalyst of improved hydrothermal stability.

Zeolite catalysts have been used and proposed for use in a number of different petroleum refining processes such as cracking, for example, as described in U.S. Patent No. 3,700,585 and 3,907,663, hydrocracking as described in U.S. Patent No. 3,923,641, dewaxing and hydrodewaxing as described in U.S. Patents Nos. Re. 28,398, 3,700,585, 3,956,102, 4,110,056 and 3,755,138, aromatization processes of the kind described in U.S. Patents Nos. 3,806,443, 3,767,568, 3,753,891, 3,770,614 and 3,843,740 and alkylation as described in U.S. Patent No. 3,641,177. They have also found utility in the petrochemical industry in, for example, alkylation processes of the kind described in U.S. Patent No. 3,668,264, 3,251,897, 4,117,024, 4,049,738 and 4,086,287, isomerization processes of the kind described in U.S. Patents Nos. 4,100,214 and 4,101,596 and disproportionation processes as described, for example, in 4,106,788 and 3,856,871. Their use in the production of hydrocarbons from other materials such as synthesis gas, methanol, dimethyl ether (DME) or other oxygenated materials is described, for example, in U.S. Patents Nos. 3,894,102 to 3,894,107, 3,899,544, 4,039,600, 4,048,250 and 4,035,430. In these processes various kinds of zeolites may be used either alone or in combination with one another or with other catalytic materials. Zeolites may be characterized as being small pore materials such as erionite or zeolite A; large pore materials such as zeolite X, zeolite Y or mordenite and the so-called shape selective zeolites exemplified by ZSM-5, ZSM-11, ZSM-12, ZSM-23, ZSM-35, ZSM-38, and ZSM-48.

One problem which has persisted with zeolitic catalysts is that of hydrothermal stability. In many of the processes in which they are used, the zeolites are exposed to water vapor at elevated temperatures and this may tend to reduce the activity of the zeolite by reason of the loss of acidic sites through dehydroxylation and dealuminization, the loss being manifested by a decrease of the alpha value of the zeolite. In some cases, particularly with zeolites of low silica:alumina ratio, crystallinity may be adversely affected. Different zeolites exhibit different degrees of hydrothermal stability but the problem is encountered to some extent with all of them. The exposure to the water vapor may occur during the catalytic process itself or in an ancillary treatment step. For example, in the hydrocarbon synthesis processes of the kind described in U.S. Patents Nos. 3,894,102 to 3,894,107, 3,899,544 and 4,035,430 using oxygenated precursors such as methanol or DME, large amounts of water are produced as by-products of the synthesis and under the reaction conditions commonly employed this will be evolved as steam which will come into direct contact with the catalyst, to its ultimate detriment. In other processes such as catalytic cracking, the steam stripping which is used to remove occluded hydrocarbons prior to regeneration, will obviously produce a similar effect, as will any steam which is present in the regeneration and which has been produced either by combustion of any hydrocarbon material on the catalyst itself or by the combustion of hydrocarbon fuel used to heat the regenerator. Obviously, the deleterious effect of the steam becomes more pronounced the longer and more frequent the exposure to it is; processes in which the catalyst is continuously or continually exposed to steam therefore present greater problems than those where the contact is occasional or at very long intervals. For example, in fluid catalytic cracking (FCC) units the catalyst is continuously circulated through the reactor and the regenerator and comes into contact with steam during each complete cycle when the catalyst is subjected to the stripping and regeneration steps.

Attempts to improve the hydrothermal stability of zeolites have often been made and have met with varying success. Moreover, although it has often been found possible to improve the hydrothermal stability, other properties of the zeolite may be adversely affected. For example, the rare earth form of faujasite zeolites have improved hydrothermal stability but the activity of the zeolite in the rare earth form may not be as great as it would be in other forms. Moreover, producing the rare earth form of a zeolite may not always be a practicable method to improve its hydrothermal stability. For example, rare earth cations do not readily enter the structure of ZSM-5 zeolites because of the low ion exchange selectivity of these cations.

It is known that large-pore zeolites such as Zeolite Y, containing monovalent copper ions can be prepared from Cu(II) ion-containing zeolites by preadsorbing ammonia into the zeolite and thereafter exposing the resulting product to carbon monoxide. Resulting materials exhibit the capacity to selectively adsorb carbon monoxide. See, e.g., "Selective Adsorption of Carbon Monoxide and Complex Formation of Cuprous-Amines in Cu(I) Y Zeolites," Y. Y. Huang, J. Catalysis, 30, 187; "Adsorption in AgX and AgY Zeolites by Carbon Monoxide and Other Simple Molecules" Y. Y. Huang, J. Catalysis, 32, 482; and "Ethylene Complexes in Copper (I) and Silver (I) Y Zeolites," Y. Y. Huang, J. Catalysis, 61, 461.

U.S. Patent 3,497,462 discloses a method of producing cuprous ($Cu^+$) -loaded zeolites such as Zeolite X, Zeolite Y or synthetic erionite from a copper (II) zeolite reduced by carbon monoxide or ammonia at temperatures above about 200°C. The resulting product appears to be relatively unstable and must be stored in a dry inert atmosphere.

U.S. Patent 4,034,065 discloses a zeolite such as ZSM-5 which contains $Cu^+$ prepared by dehydration of $Cu^{++}$ zeolite. In view of the necessity of maintaining the $Cu^{++}$ zeolite in a dehydrated state during reduction, it appears necessary to carry out the reduction under dry conditions.

U.S. Patent 4,331,644 discloses an oxidative combustion catalyst comprising a highly siliceous shape-selective zeolite such as ZSM-5 containing divalent copper cation. Cu(I) is converted to Cu(II) by oxidation of the zeolite, e.g., by contact with $NO_2$ at room temperature. The shape-selective product exhibits greater combustion activity than a corresponding large pore zeolite, Y.

It has now been found that a hydrothermally stable highly siliceous shape selective zeolite, such as ZSM-5, can be prepared by subjecting a $Cu^{++}$ cation-containing zeolite to a particular reduction process so as to reduce at least some, preferably a substantial amount, say about 5 to 100% of said $Cu^{++}$ cation to $Cu^+$ cation without forming a significant amount of copper metal. The resulting zeolite exhibits improved hydrothermal stability, while retaining sufficient cracking activity, under hydrocarbon conversion and oxidation conditions. This cracking activity contrasts favorably with the activity of zeolites which have been exchanged with rare earth metal to enhance hydrothermal stability.

Accordingly, the invention resides in one aspect in a method for preparing a hydrothermally stable zeolite catalyst, comprising contacting a zeolite having a Constraint Index of 1 to 12 and a silica to alumina mole ratio of 12 to 100 and having incorporated therein $Cu^{++}$ cation with a reducing agent comprising a mixture of CO and $NH_3$ having a molar ratio of $CO:NH_3$ ranging from 50:1 to 1:1, at a temperature of 400 to 550°C (750 to 1022°F) and a pressure of $10^{-1}$ to $10^4$ kPa so as to reduce at least some of said $Cu^{++}$ cations to $Cu^+$ cations.

It has been found that the zeolites treated in accordance with the present method should have silica to alumina mole ratios no higher than about 100 owing to the need for significant amounts of aluminum within the crystalline framework to effect sufficient ion exchange of cupric ion. Zeolites treated in accordance with the method of the present invention may have a silica to alumina ratio ranging from 12 to 100, preferably 40 to 100.

The siliceous zeolites employed herein also exhibit constrained access to and egress from their intracrystalline free space inasmuch as they have a constraint index of from 1 to 12, constraint index being described in, for example, U.S. Patent No.4,016,218. Zeolite materials which have a silica to alumina molar ratio of at least 12 and a constraint index within the range of 1 to 12 are well known. Preferred zeolites of this type include zeolite beta (U.S. Patent Nos. 3,308,069 and RE 28, 341), ZSM-5 (U.S. Patent Nos. 3,702,886 and RE 29,948), ZSM-11 (U.S. Patent No. 3,709,979), ZSM-12 (U.S. Patent No. 3,832,449), ZSM-23 (U.S. Patent No. 4,076,842), ZSM-35 (U.S. Patent No. 4,016,245), ZSM-38 (U.S. Patent No. 4,046,859), and ZSM-48 (U.S. Patent No. 4,375,573), with ZSM-5 being particularly preferred.

When the zeolites are prepared in the presence of organic cations they are initially catalytically inactive, possibly because the intracrystalline free space is occupied by organic cations from the forming solution. They may be activated by heating in an inert atmosphere at 540°C for at least about one hour, for example, followed by base exchange with ammonium salts followed by calcination at 540°C in air.

$Cu^{++}$ cation-containing zeolites may be prepared by incorporating copper into the zeolite by ion-exchange or by impregnation. When the metal is introduced by ion exchange from a solution containing $Cu^{++}$ cations of the metal, it will obviously be in the desired form and for this reason, ion exchange is the preferred method of incorporating the metal. On the other hand, if the metal is incorporated into the zeolite by impregnation with a copper complex, such as $[CuCl_4]^{2-}$, the copper must be oxidized to the desired cationic form. The complex anion may, if desired, be first converted to the zero valent metal, e.g., by heating, before being oxidized to the required cationic form.

Ion-exchange of the zeolite is readily accomplished using commonly available copper salts such as $CuCl_2$, $CuSO_4$, cupric acetate and $Cu(NO_3)_2$, preferably the latter, in an aqueous medium. A satisfactory procedure comprises contacting at reflux temperature the starting zeolite with about 25 ml per gram of an aqueous solution containing the cupric salt in a concentration of 0.01 to 5 moles per liter of water. Contact is maintained for 0.01 to 168 hours, preferably 0.1 to 8 hours, and then the procedure may be repeated using fresh ion exchange medium. In washing the final zeolite product with distilled water to remove extraneous salts, care should be taken to avoid overwashing and consequent $H^+$ exchange of the copper cation-containing product. Advantageously, the pH of the washing water is preferably at least 5.

The metal content of the zeolite should normally be at least 0.1 weight percent, regardless of the method of incorporation, and preferably should be at least 0.5 weight percent for satisfactory stabilization. The maximum loading will be set by the nature of the zeolite and the method by which the metal is incorporated into the zeolite. If ion exchange is used, the maximum loading will be set by the exchange capacity of the zeolite which, in turn, is a function of silica:alumina ratio. Because acidic sites will normally be desired in the zeolite in order to confer activity the proportion of available sites occupied by the metal cations will be appreciably below the total. If the metal is incorporated by impregnation, the exchange capacity of the zeolite will impose no fundamental limitation on the loading but other factors, such as sorption of the metal containing species, may do so. The amount of metal incorporated into the zeolite will therefore tend to be of the same order, regardless of the method of incorporation. Generally, the maximum loading will be 10 weight percent and, more usually, 5 weight percent.

The cation exchange with the copper (II) cations should be sufficient to ensure that at least about 10 percent, preferably at least about 50 percent of the exchangeable sites on the zeolite are occupied by copper cation. Exchange to the desired extent can be ensured by conventional techniques such as prolonged exchange and repeated exchange.

After Cu(II) exchange, the zeolite is washed with a suitable washing medium such as water, acetone or alcohol. The washed material may be dried at temperatures sufficient to remove the washing medium without deleteriously affecting the zeolite framework. Thereafter, the material is calcined in a suitable inert atmosphere such as $N_2$, He, $CH_4$, or an oxygen containing medium such as air, at temperatures ranging from 200°C to 800°C, preferably 350° to 550°C, for a period of time sufficient to remove volatile materials and oxidize the copper, say 0.01 to 24 hours, preferably 0.5 to 10 hours.

The Cu(II) exchanged zeolite is then reduced to the desired Cu(I) form by exposure to a reducing agent under specified conditions. The reducing agent must be sufficiently active to convert at least some, preferably a substantial amount of divalent copper to the monovalent form. The reducing agent comprises a mixture of CO and $NH_3$ having a $CO:NH_3$ molar ratio ranging from 50 to 1, preferably 10 to 2. Pressure during reduction of the cupric ion can range from about $10^{-1}$ to $10^4$ kPa, preferably 1 to $10^3$ kPa, say about $10^2$ kPa, while temperature is maintained at 100 to 700°C, preferably 200 to 500°C. Exposure to the reducing agent lasts anywhere from 0.1 to 168 hours, preferably 0.5 to 10 hours, depending on the extent of reduction desired. Preferably, substantially all of the $Cu^{++}$ is reduced to $Cu^+$ with only residual amounts of $Cu^{++}$ or copper metal present in the resulting zeolite. The reduced zeolite contains from 0.05 to 10, preferably 0.1 to 5 weight percent cuprous ion.

It has been found that the degree of improvement in the hydrothermal stability is greater with higher structural silica:alumina ratios in the zeolite. Ratios of at least 30:1 are preferred, especially for zeolite beta and ratios of at least 40:1 and preferably even higher may be present. However, when the ratio is increased to over 100, difficulties arise in effecting the desired ion exchange of copper into the zeolite. Accordingly, as noted previously, the zeolites treated in accordance with the present invention have silica to alumina molar ratios no greater than about 100.

If the desired zeolite selected may be produced in the highly siliceous form by direct synthesis, this will often be the most convenient method for obtaining it. Zeolite beta, for example, is known to be synthesized directly in forms having silica:alumina ratios up to 100:1, as described in U.S. Patents Nos. 3,308,069 and Re 28,341.

Control of the silica:alumina ratio of the zeolite in its as-synthesized form may be exercised by an appropriate selection of the relative proportions of the starting materials, especially the silica and alumina precursors, a relatively smaller quantity of the alumina precursor resulting in a higher silica:alumina ratio in the product zeolite, up to the limit of the synthetic procedure. If higher ratios are desired and alternative syntheses affording the desired high silica:alumina ratios are not available, other known techniques may be used in order to prepare the desired highly siliceous zeolites.

The zeolite may be composited with another material which is resistant to the temperatures and other conditions employed in the process. Matrix materials include synthetic or naturally occurring substances e.g. inorganic materials such as clay, silica and/or metal oxides. The latter may be either naturally occurring or in the form of gelatinous precipitates or gels including mixtures of silica and metal oxides. Naturally occurring clays can be composited with the zeolite and these clays can be used in the raw state as originally mined or initially subjected to calcination, acid treatment or chemical modification.

The zeolites may also be composited with a porous matrix material, such as silica-alumina, silica-magnesia, silica-zirconia, silica-titania or a ternary composition, such as silica-alumina-thoria, silica-alumina-zirconia, silica-alumina-magnesia or silica-magnesia-zirconia. The matrix may be in the form of a cogel. The relative proportions of finely divided modified zeolite and inorganic oxide gel matrix may vary widely, with the zeolite content ranging from 1 to 99 percent by weight and more usually in the range of 5 to about 80 percent by weight of the composite.

The zeolite, when in the Cu(I) form exhibits improved hydrothermal stability, that is, it is more resistant to the deleterious effects of exposure to steam (water vapor) at elevated temperatures. The zeolite in this form is therefore useful in catalytic processes in which it is continuously or continually subjected to exposure to steam. Processes of this kind include those in which water in the form of steam is obtained as a by-product of the reaction which is being catalyzed by the zeolite as well as those in which the exposure to the steam occurs in an ancillary process such as stripping or regeneration. Exposure of this kind, which quickly brings about a decrease in the activity of the zeolite is to be distinguished from processes where any exposure to steam takes place only intermittently, for example, during the regenerations of a zeolite catalyst used in an alkylation process of the kind described in U.S. Patent No. 4,276,438 where regeneration takes place at approximately yearly intervals. The proportionately brief exposure to steam which takes place during regeneration at such extended intervals usually works no substantial harm upon the zeolite and is, by contrast, unobjectionable and poses little problem. The activity of the zeolite may be determined by the alpha test described in U.S. Patent 4,090,981.

The most severe service, in terms of the zeolite's ability to withstand exposure to steam, is encountered in processes where water in the form of steam is continuously encountered as a by-product of the reaction which is being catalyzed by the zeolite. Processes of this kind include, in particular, those in which an oxygenated starting material such as methanol, dimethyl ether (DME) or ethanol is being converted to a hydrocarbon. Processes of this kind are described, for example, in U.S. Patents Nos. 3,894,102, 3,894,103, 3,894,104, 3,894,105, 3,894,106, 3,894,107, 3,899,544, 3,907,915, 4,039,600, 4,048,250, 4,035,430, 3,928,483, 3,998,898, 4,039,600, 4,035,430, 4,188,336 and British Patents No. 1,495,794 and 1,489,357.

Processes in which the zeolite is continually exposed to water vapor at elevated temperatures also receive a benefit from the present invention. In the catalytic cracking of petroleum, for example, the catalyst is continuously cycled between the reactor (cracker) in which the cracking reactions take place and the regenerator where the accumulated coke is burnt off. The catalyst is stripped by steam between the reactor and the regenerator and in the regenerator itself steam may be present from the combustion of residual amounts of hydrocarbon occluded in the catalyst. Hydrothermal stability of the cracking catalyst is therefore highly desirable as the catalyst undergoes continual exposure to the deactivating effect of the water vapor.

The invention is further illustrated by the following examples.

EXAMPLE 1

"As synthesized" ZSM-5 of 70 $SiO_2/Al_2O_3$ was calcined at 538°C in $N_2$ for 3 hours followed by $NH_4NO_3$ to reduce Na content to less than 0.02% by weight. The catalyst was calcined again at about 538°C in air for 3 hours.

One part of the above calcined ZSM-5 was exchanged with ten parts of 0.1 N Cu(II) nitrate solution at ambient conditions for 4 hours. The exchange was repeated and the resulting product was then washed with water, dried at 110°C for 3 hours and then calcined in air at a temperature of about 510°C for about 3 hours. The catalyst was analyzed and found to contain 0.81% by weight of copper. The Cu(II) ions were reduced to Cu(I) by exposure of the calcined zeolite to a 5:1 molar ratio mixture of CO and $NH_3$ at a temperature of about 510°C for 1 to 2 hours. The catalyst which had a light green or blue color when in the cupric state, became white, indicating the selective reduction of cupric ion into cuprous ion. The presence of cuprous ions in the zeolite was further confirmed by the specific adsorption of CO at room temperature and subatmospheric pressures, as shown in Table I.

Table 1

## Table 1

### Specific Adsorption of Carbon Monoxide
### (at 25°C and 0.91 kPa (100 Torr))
### on a Copper (I) - ZSM-5 Catalyst

| | Pretreatment | Color | Oxidation State of Copper |
|---|---|---|---|
| (1) | Ion-exchanged with $Cu^{2+}$ and calcined | Lt green | +2 |
| (2) | Partial reduction by $CO+NH_3$ (510°C, 1.5 hr) | White | +1 |
| (3) | Regenerated in air (510°C, 1.5 hr) | Lt. green | +2 |
| (4) | Reduction by CO only (510°C, 1.5 hr) | Essentially White | +1 and +2 |
| (5) | Reduction by $H_2$ only (510°C, 1.5 hr) | Red | Metallic |

| | Pretreatment | CO Uptake, m mol/g Total | (Specific) | CO/Cu* Mol Ratio |
|---|---|---|---|---|
| (1) | Ion-exchanged with $Cu^{2+}$ and calcined | 0.120 | 0 | 0 |
| (2) | Partial reduction by $CO+NH_3$ (510°C, 1.5 hr) | 0.275 | 0.155 | 1.2 |
| (3) | Regenerated in air (510°C, 1.5 hr) | 0.140 | .020 | 0.2 |
| (4) | Reduction by CO only (510°C, 1.5 hr) | 0.203 | .083 | 0.6 |
| (5) | Reduction by $H_2$ only (510°C, 1.5 hr) | 0.090 | −0.030 | 0 |

* Total copper content in ZSM-5 is 0.3% wt or 0.128 m mol/g.

EXAMPLE 2

The hydrothermal stability of the Cu(I) ZSM-5 catslyst of Example 1 was compared with HZSM-5. Both materials were steamed at 649°C (1200°F) for four hours and tested for their n-hexane cracking activity as described in U.S. Patent No. 4,090,981. The resulting alpha activities of 25 for Cu(I) ZSM-5 and 7 for HZSM-5 indicate the enhanced hydrothermal stability of monovalent copper-containing zeolite.

EXAMPLE 3

"As synthesized" zeolite beta having a $SiO_2/Al_2O_3$ ratio of 35 was calcined at 538°C in $N_2$ for 3 hours, followed by ion exchange with 1N $NH_4NO_3$ solution to reduce Na content to less than 0.02% by weight. The catalyst was calcined again at 538°C in air for 3 hours.

One part of the above calcined zeolite beta was exchanged again with ten parts of 0.1N Cu(II) nitrate solution at ambient conditions for 4 hours to incorporate about 1.5% Cu by weight. The exchanged Cu(II) beta was then washed

with $H_2O$, dried at 110°C for 3 hours and then calcined in air at a temperature of about 510°C for about 3 hours. The Cu(II) ions were reduced to Cu (I) by exposure of the calcined zeolite to a 5:1 molar ratio mixture of CO and $NH_3$ at a temperature of about 510°C for 1 to 2 hours.

**Claims**

1. A method for preparing a hydrothermally stable zeolite catalyst, comprising contacting a zeolite having a Constraint Index of 1 to 12 and a silica to alumina mole ratio of 12 to 100 and having incorporated therein $Cu^{++}$ cation with a reducing agent comprising a mixture of CO and $NH_3$ having a molar ratio of $CO:NH_3$ ranging from 50:1 to 1:1, at a temperature of 400 to 550°C (750 to 1022°F) and a pressure of $10^{-1}$ to $10^4$ kPa so as to reduce at least some of said $Cu^{++}$ cations to $Cu^+$ cations.

2. The method of Claim 1 wherein said molar ratio of $CO:NH_3$ ranges from 10:1 to 2:1, said temperature ranges from 200 to 500°C, and said pressure ranges from 1 to $10^3$ kPa.

3. The method of Claim 1 or Claim 2 wherein said zeolite is selected from zeolite beta, ZSM-5, ZSM-11, ZSM-12, ZSM-23, ZSM-35, ZSM-38 and ZSM-48.

4. The method of Claim 3 wherein said zeolite is zeolite beta.

5. The method of Claim 3 wherein said zeolite is ZSM-5.

6. The method of any preceding Claim wherein 5 to 100% of said $Cu^{++}$ is reduced to $Cu^+$.

7. The method of any preceding Claim wherein substantially all of said $Cu^{++}$ is reduced to $Cu^+$.

8. Use in a hydrocarbon conversion process of a zeolite catalyst prepared by the method of any preceding Claim.